# EUROPÄISCHE PATENTSCHRIFT

(11) **EP 3 204 669 B1**
(45) Veröffentlichungstag und Bekanntmachung des Hinweises auf die Patenterteilung: **03.07.2019**
(21) Anmeldenummer: 15767122.3
(22) Anmeldetag: 15.09.2015
(51) Int. Cl.: F16K 1/04, F16K 31/528, F16K 24/02, B60K 15/03, B60K 15/077, F16K 3/24, B01D 17/02

(54) **ABLAUFSTUTZEN**
DRAINAGE CONNECTOR
AJUTAGE D'ÉVACUATION

(30) Priorität: 07.10.2014 DE 102014114486
(43) Veröffentlichungstag der Anmeldung: 16.08.2017
(73) Patentinhaber: NORMA Germany GmbH, 63477 Maintal (DE)
(72) Erfinder: JACKSTEIT, Bruno, 63477 Maintal (DE); BAUER, Andreas, 63477 Maintal (DE); SENFTLEBEN, Stephan, 63477 Maintal (DE)
(74) Vertreter: Patentanwälte Olbricht Buchhold Keulertz
(86) Internationale Anmeldenummer: PCT/EP2015/071037
(87) Internationale Veröffentlichungsnummer: WO 2016/055238

(56) Entgegenhaltungen:
- WO-A2-02/05919
- WO-A2-2006/055896
- WO-A2-2006/055896

## Beschreibung

Die Erfindung betrifft einen Ablaufstutzen zum getrennten Auslassen von Flüssigkeiten unterschiedlicher Dichte wie insbesondere Wasser und Kraftstoff gemäß dem Oberbegriff von Anspruch 1.

Ein derartiger Ablaufstutzen, siehe WO 2006/055896 A2 und WO 02/05919 A2, wird beispielsweise im Zusammenhang mit Kraftstofftanks eingesetzt, um Wasser, das sich am Boden des Tanks angesammelt hat, über einen Ablasskanal durch Öffnen eines Ventilelements, das gegebenenfalls als Schraube ausgebildet ist, abzulassen. Gleichzeitig stellt der Ablaufstutzen dann einen Auslass für den Kraftstoff bereit, der im Betrieb kontinuierlich entnommen wird. Für Servicearbeiten kann es jedoch erforderlich sein, den Auslass für den Kraftstoff ebenfalls zu schließen. Dafür wird im Stand der Technik vorgeschlagen, am Auslass des Ablaufstutzens eine Ventileinheit anzuschließen, mit der dann ein Auslassrohr verbunden wird, dass eine Anschlussstutzengeometrie zum Anschließen weiterführender Leitungen aufweist.

Derartige Ablaufstutzen werden also aus relativ vielen Einzelteilen zusammengesetzt, wobei zumindest die Ventileinheit in der Regel aus Metall gefertigt wird, um ausreichend widerstandsfähig zu sein. Daher sind die aus dem Stand der Technik bekannten Ablaufstutzen zum einen relativ schwer, zum anderen aber auch nur aufwendig und damit kostenintensiv herstellbar. Dabei besteht aufgrund der erforderlichen Verbindungsstellen das Risiko von Undichtigkeiten.

Der Erfindung liegt nun die Aufgabe zu Grunde, die Nachteile des Stands der Technik zu vermeiden und einen Ablaufstutzen anzugeben, der insbesondere mit geringem Aufwand kostengünstig herstellbar ist und eine geringe Masse aufweist. Ferner soll eine Fehlbedienung möglichst erschwert werden.

Diese Aufgabe wird durch einen Ablaufstutzen mit den Merkmalen des Anspruchs 1 gelöst. Vorteilhafte Ausgestaltungen sind Gegenstand der Ansprüche 2 bis 12.

Bei einem Ablaufstutzen mit einem becherförmigen Gehäuse, das einen Gehäuseboden und eine Gehäusewandung umfasst, wobei außen an der Gehäusewandung eine Anschlussgeometrie zum Einsetzen in eine Behälteröffnung ausgebildet ist, und wobei ein Einlassrohr von einer Einlassseite zu einer Auslassseite durch den Gehäuseboden geführt ist und ein ringförmiger Sammelraum zwischen Einlassrohr und Gehäusewandung ausgebildet ist, der zur Einlassseite offen ist, wobei das Gehäuse einen Ablasskanal aufweist, der vom Sammelraum zur Auslassseite führt und von der Auslassseite verschließbar ist, ist erfindungsgemäß vorgesehen, dass das Einlassrohr auf der Ausgangsseite in ein Auslassrohr übergeht, welches ein Verschlusselement aufweist, das zwischen einer Offenstellung und einer Schließstellung bewegbar ist, wobei das Gehäuse mit der Anschlussgeometrie, dem Einlassrohr und dem Auslassrohr einstückig aus Kunststoff gebildet ist.

In der Offenstellung des Verschlusselements wird dabei ein Ablaufen von Flüssigkeit durch das Einlassrohr und das Auslassrohr freigegeben, während in der Schließstellung ein freier Strömungsquerschnitt im Auslassrohr durch das Verschlusselement gesperrt wird, so das keine Flüssigkeit ausfließen kann.

Dabei kann über das Einlassrohr und das Auslassrohr die Flüssigkeit mit geringerer Dichte, wie beispielsweise ein Kraftstoff, und über den Ablasskanal die Flüssigkeit mit höherer Dichte, wie beispielsweise Wasser, aus dem Behälter entnommen werden. Der Ablaufstutzen stellt also eine Kombination für den getrennten Ablauf zweier Flüssigkeiten unterschiedlicher Dichte, wie Wasser und Kraftstoff, zur Verfügung, der bis auf die jeweiligen Ventilelemente einstückig aus Kunststoff beispielsweise als Spritzgussteil herstellbar ist. Dementsprechend ist der zur Herstellung erforderliche Aufwand minimal. Dabei sind innerhalb des Ablaufstutzens keine Koppelstellen ausgebildet, so dass keine Undichtigkeiten auftreten können. Durch die Verwendung von Kunststoff ergibt sich zum einen die einfache Herstellung, zum anderen gegenüber Bauteilen aus Metall auch eine Massereduzierung und damit beispielsweise beim Einsatz in Kraftfahrzeugen eine Verbrauchseinsparung. Dabei können problemlos Kunststoffe eingesetzt werden, die resistent gegen Oxidation und die in den Flüssigkeiten enthaltenen Substanzen sind.

Dabei ist das Verschlusselement bevorzugterweise auch aus einem Kunststoff insbesondere als Spritzgussteil gebildet. Das Verschlusselement kann in der gewünschten Form dann ebenfalls kostengünstig mit geringer Masse hergestellt werden. Dabei kann das Verschlusselement und das Gehäuse aus den gleichen, aber auch aus unterschiedlichen Kunststoffen hergestellt werden.

Um sicherzustellen, dass über das Einlassrohr und das Auslassrohr nur die Flüssigkeit mit geringerer Dichte abfließt, weist das Einlassrohr vorzugsweise eingangsseitig eine größere Erstreckung auf als die Anschlussgeometrie. Das Einlassrohr erstreckt sich also weiter in einen Behälter hinein als die Anschlussgeometrie, so dass die in Bodennähe befindliche Flüssigkeit nur über den Ablasskanal entnommen werden kann. Insbesondere beim Einsatz in Kraftstofftanks ergibt sich damit eine hohe Betriebssicherheit, da so zuverlässig vermieden werden kann, dass Wasser aus dem Kraftstofftank zum Motor gelangt.

Vorzugsweise mündet das Einlassrohr in eine Auslassrohrwandung des Auslassrohrs, wobei das Auslassrohr insbesondere im Wesentlichen senkrecht zum Einlassrohr verläuft. Das Einlassrohr geht also nicht fluchtend in das Auslassrohr über, sondern mündet in dessen Auslassrohrwandung, so dass sich das Auslassrohr ausgehend von der Mündung in zwei Richtungen erstreckt. Dabei ergibt sich eine besonders günstige Ausgestaltung dadurch, dass das Auslassrohr und das Einlassrohr T-förmig zueinander angeordnet sind, also senkrecht zueinander verlaufen.

Der Ablasskanal, der zum Abführen der Flüssigkeit mit höherer Dichte aus dem Sammelraum dient, kann mit einem insbesondere senkrecht zum Ablasskanal geführten Ventilelement verschließbar sein, dass gegebenenfalls als Schraube ausgebildet ist. Damit ergibt sich eine einfache und raumsparende Möglichkeit, den Ablasskanal sicher zu verschließen.

Dabei ist der Ablasskanal vorteilhafterweise im Ventilbereich gestuft ausgebildet. Durch diese Stufe kann eine Ablassöffnung des Ablasskanals in größerem Abstand zum Gehäuse angeordnet werden. Gleichzeitig steht mehr Raum für das Ventilelement zur Verfügung.

In einer besonders bevorzugten Ausgestaltung ist das Verschlusselement von einer Stirnseite in das Auslassrohr eingeführt und axial verschiebbar im Auslassrohr gelagert, wobei insbesondere zwischen einer Auslassrohrwandung und dem Verschlusselement eine Kulissenführung ausgebildet ist. Ausgehend von der Mündung des Einlassrohrs in das Auslassrohr wird die eine Hälfte des Auslassrohres also zur Aufnahme und Führung des Verschlusselements genutzt, während über die andere Hälfte die Flüssigkeit abgeführt werden kann. Damit ergibt sich eine sehr stabile und verschmutzungsunanfällige Unterbringung des Verschlusselements im Auslassrohr. Durch die Kulissenführung wird eine Drehbewegung, die von außen in das Verschlusselement eingebracht wird, in eine kombinierte Bewegung in Radial- und Axialrichtung umgewandelt, wodurch das Verschlusselement in das Auslassrohr hinein oder hinaus bewegt wird. Dadurch wird das Verschlusselement zwischen Offenstellung und Schließstellung bewegt. Eine unbeabsichtigte Betätigung, beispielsweise indem ein Gegenstand gegen das Verschlusselement fällt, ist dabei kaum möglich. Eine zusätzliche Sicherheit kann dadurch erreicht werden, dass in den Endpositionen der Kulissenführung, die der Schließstellung bzw. der Offenstellung entsprechen, Rastungen vorgesehen werden und/oder die Kulissenführung in Umfangsrichtung verläuft. Das Verschlusselement ist damit in der Schließstellung und der Offenstellung sicher positioniert.

Bevorzugterweise weist das Verschlusselement einen Ringraum auf, wobei der Ringraum in der Öffnungsstellung im Bereich einer Mündung des Einlassrohrs in das Auslassrohr positioniert ist. Über diesen Ringraum erfolgt dann eine Abdichtung im Auslassrohr, wenn sich das Verschlusselement in der Schließstellung befindet. Dabei wird der Ringraum vorzugsweise dadurch gebildet, dass in diesem Bereich ein Außendurchmesser geringer ist als ein Innendurchmesser des Auslassrohrs. Der Ringraum wird dann axial durch jeweils mindestens einen Bereich mit größerem Durchmesser begrenzt, insbesondere durch radial nach außen ragende, umlaufende Kragen. Diese dienen dann zur eigentlichen Abdichtung, wobei Sie gegebenenfalls mit zusätzlichen Dichtelementen versehen werden, um auch bei höheren Drücken Leckagen auszuschließen.

Vorteilhafterweise ist der Ringraum in axialer Richtung mindestens so lang wie Durchmesser des Einlassrohrs. Die Mündung wird dann in der Schließstellung des Verschlusselements vollständig vom Ringraum überdeckt.

Bevorzugterweise ist das Verschlusselement in der Offenstellung vollständig auf einer Seite der Mündung des Einlassrohrs im Auslassrohr positioniert. Im normalen Betrieb liegt das Verschlusselement so vollständig außerhalb des Strömungsweges und stellt somit keinen Strömungswiderstand dar. Die Flüssigkeit kann in der Offenstellung des Verschlusselements also frei durch die andere Seite des Auslassrohrs abfließen.

Mit besonderem Vorteil ragt das Verschlusselement in der Offenstellung und in der Schließstellung an einem Ende aus dem Auslassrohr heraus. Das Verschlusselement ist so in jeder Position an seinem herausragenden Ende von außen problemlos betätigbar.

Dichtelemente können zur bessere Abdichtung insbesondere auf beiden Seiten des Ringraums zwischen dem Verschlusselement und der Auslassrohrwandung angeordnet sein, die insbesondere in Ringnuten gehalten sind, die im Verschlusselement oder der Auslassrohrwandung ausgebildet sind. Auch bei höheren Drücken können Leckagen so zuverlässig vermieden werden.

Ein Innendurchmesser des Auslassrohres kann auf der Hälfte, über die die Flüssigkeit abgelassen sein, geringer sein als auf der Hälfte, in der das Verschlusselement angeordnet ist. Ein Außendurchmesser des Verschlusselements bzw. des Kragens auf der Seite des Ringraums, die zu der Hälfte des Auslassrohres zeigt, über das die Flüssigkeit abgeführt wird, kann dann ebenfalls geringer sein als auf der anderen Seite. Beim Verschieben des Verschlusselements wird damit verhindert, dass sich ein Dichtelement in die Mündung zum Einlassrohr hinein erstreckt und dadurch mechanisch belastet wird. Somit wird eine lange Lebensdauer erhalten.

In einer bevorzugten Ausgestaltung weist ein vom Verschlusselement abgewandtes Ende des Auslassrohrs eine Anschlussstutzengeometrie auf. Diese Anschlussstutzengeometrie kann dann auf ein bestimmtes Verbindungssystem oder genormte Leitungsanschlüsse abgestimmt sein, um einen problemlosen Anschluss weiterführender Leitungen zu ermöglichen. Gegebenenfalls kann die Anschlussstutzengeometrie dann auch Rastverbindungen und ähnliches umfassen.

Vorzugsweise weist das Verschlusselement radial nach außen ragenden Führungsrippen auf, die insbesondere in einem Bereich des Auslassrohrs mit Durchmesservergrößerung an einer Innenwandung des Auslassrohrs anliegen. Das Verschlusselement selbst kann so relativ schlank gehalten werden und stützt sich im Wesentlichen nur über die Führungsrippen an der Innenwandung ab. Dadurch wird eine Material- und damit Gewichtseinsparung sowie eine relativ reibungsarme Lagerung erhalten.

In einer bevorzugten Weiterbildung umfasst das Verschlusselement einen Kopf, der einen größeren Durchmesser aufweist als die Führungsrippen und als ein größter Innendurchmesser des Auslassrohrs. Am Kopf kann dann eine Drehmomentangriffsfläche ausgebildet sein. So ist eine Betätigung des Verschlusselements über den Kopf relativ einfach möglich, wobei durch den vergrößerten Durchmesser des Kopfes eine höhere mechanische Stabilität erhalten wird und gegebenenfalls auch eine Betätigung ohne Werkzeug ermöglicht wird.

Das Verschlusselement weist vorzugsweise zumindest ein Sackloch auf, das insbesondere offen zur von der Mündung des Einlassrohrs abgewandten Seite ausgebildet ist. Das Sackloch geht also vom Kopf aus. Dadurch wird eine Material- und Gewichtseinsparung erreicht.

Dafür kann auch alternativ oder zusätzlich ein Sackloch vorgesehene werden, welches offen zum vom Kopf abgewandten Ende des Verschlusselement ist. Bis auf eine Wandung zwischen den miteinander fluchtenden Sacklöchern ist das Verschlusselement somit hohl ausgebildet.

Am Kopf kann eine Anlagefläche ausgebildet sein, deren Durchmesser größer ist als ein Innendurchmesser des Auslassrohrs. Diese Anlagefläche kommt dann in Schließstellung zur Anlage an eine Stirnseite des Auslassrohrs und verhindert eine weitere Bewegung des Verschlusselements in das Auslassrohr hinein. Somit wird eine eindeutige Endlage definiert.

In einer bevorzugten Ausgestaltung ist eine Kappe am Verschlusselement angeordnet, die sich in Richtung Einlassrohr erstreckt und das Auslasselement umgibt, wobei sie insbesondere mit dem Verschlusselement verrastet ist, wobei gegebenenfalls der Kopf des Verschlusselements durch die Kappe hindurch ragt. Diese Kappe schützt die Kulissenführung und den aus dem Auslassrohr hinaus bewegbaren Teil des Verschlusselements vor Verschmutzungen. Auch wird das Eindringen von Verunreinigungen zwischen dem Verschlusselement und der Innenwandung des Auslassrohrs verhindert, was zu Undichtigkeiten führen würde. Dabei kann die Kappe auch während der Betätigung des Verschlusselements am Ablaufstutzen befestigt bleiben.

In einer alternativen Ausgestaltung ist eine Kappe vorgesehen, die im montierten Zustand das aus dem Auslassrohr herausragende Ende des Verschlusselements sowie das Auslassrohr zumindest über eine axiale Länge überdeckt, die einem Stellweg des Verschlusselements von der Offenstellung in die Schließstellung entspricht, wobei die Kappe insbesondere mit einer Verliersicherung am Auslassrohr gehalten ist. Diese Kappe kann beispielsweise reibschlüssig am Auslassrohr befestigt werden und schützt das Verschlusselement und das innere des Auslassrohrs zuverlässig vor Verschmutzungen. Zur Betätigung des Verschlusselements muss diese Kappe allerdings entfernt werden, wobei ein Verlieren der Kappe durch die Verliersicherung verhindert wird, die beispielsweise durch ein bandförmiges Element gebildet wird, das mit einem Ende am Anschlussrohr und mit einem anderen Ende an der Kappe befestigt ist. Die Kappe und die Verliersicherung können dabei einstückig beispielsweise als Kunststoffteil ausgebildet sein.

Vorzugsweise ist an der Gehäusewandung des Ablaufstutzens außenseitig eine Ringdichtung am bodenseitigen Ende der Anschlussgeometrie angeordnet, wobei insbesondere ein radial nach außen ragender Anschlag auf der von der Anschlussgeometrie abgewandten Seite der Ringdichtung ausgebildet ist. Damit kann der Ablaufstutzen zuverlässig fluiddicht in eine Behälteröffnung eingesetzt werden. Dabei ist das Einsetzen besonders einfach, wenn die Anschlussgeometrie als Außengewinde ausgebildet ist

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Ablaufstutzen in räumlicher Darstellung,
- Fig. 2: den Ablaufstutzen nach Fig. 1 mit Kappe,
- Fig. 3: den Ablaufstutzen nach Fig. 2 in geschnittener Darstellung und
- Fig. 4: den Ablaufstutzen in geschnittener Darstellung mit alternativer Kappe.

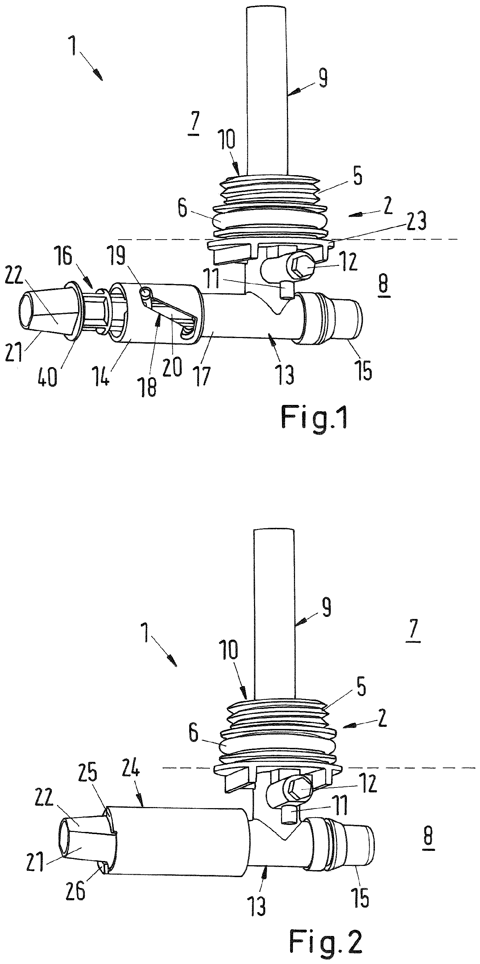

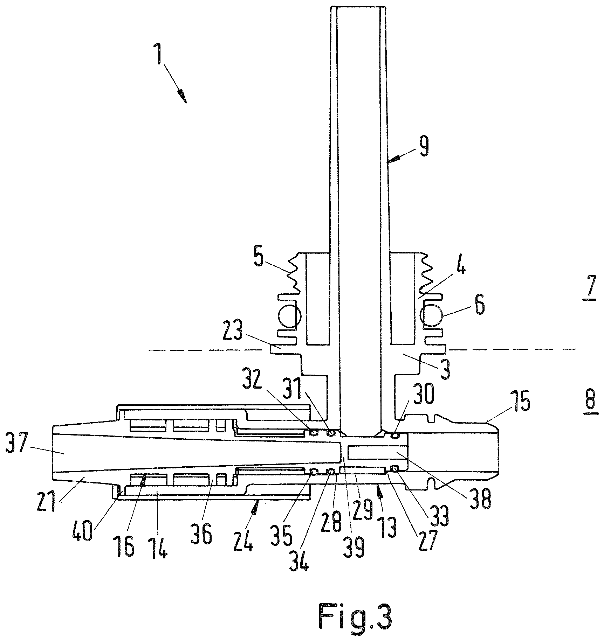

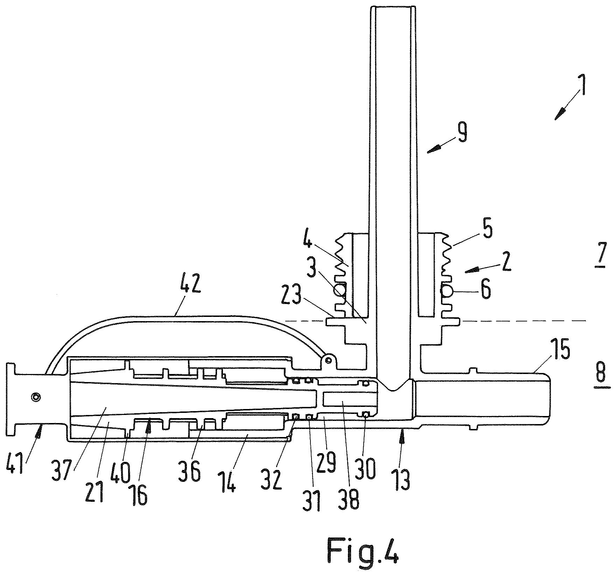

In Fig. 1 ist ein Ablaufstutzen 1 in räumlicher Darstellung gezeigt, der in eine Behälteröffnung eingesetzt werden kann, um Flüssigkeiten unterschiedlicher Dichte getrennt voneinander ablassen zu können. Der Ablaufstutzen 1 weist ein becherförmiges Gehäuse 2 mit einem Gehäuseboden 3 und einer Gehäusewandung 4 auf (siehe Fig. 3 und 4), wobei an einer Außenseite der Gehäusewandung 4 eine Anschlussgeometrie 5 in Form eines Außengewindes eingeformt ist. Darüber kann der Ablaufstutzen in eine entsprechende Behälteröffnung beispielsweise eines Kraftstofftanks fluiddicht bis zur Anlage eines radial nach außen ragenden, umlaufenden Anschlags 23 an einer Behälteraußenseite eingeschraubt werden. Zur zusätzlichen Abdichtung ist beim gezeigten Ausführungsbeispiel eine Ringdichtung 6 am bodenseitigen Ende der Anschlussgeometrie 5 vorgesehen, die in einer Ringnut gehalten ist, die in die Gehäusewandung 4 eingeformt ist.

Der Gehäuseboden 3 trennt eine Einlassseite 7, die beispielsweise innerhalb eines Kraftstofftanks liegt, von einer Auslassseite 8, die für einen Benutzer zugänglich ist. Zum Ableiten beispielsweise von Kraftstoff umfasst der Ablaufstutzen ein Einlassrohr 9, dass einstückig mit dem Gehäuse 2 ausgebildet ist und den Gehäuseboden 3 durchdringt. Das Einlassrohr, das bei montierten Ablaufstutzen in den Behälter hineinragt, stellt somit eine fluidleitende Verbindung zwischen Einlassseite 7 und Auslassseite 8 her.

Zwischen dem Einlassrohr 9 und der Gehäusewandung 4 ist auf der Einlassseite ein ringförmiger Sammelraum 10 ausgebildet. Bei montiertem Ablaufstutzen 1 sammelt sich im Sammelraum 10 die Flüssigkeit mit höherer Dichte, die über einen Ablasskanal 11, der in den Sammelraum 10 mündet und zur Auslassseite 8 führt, abgelassen werden kann. Somit ist es beispielsweise möglich, sich in einem Kraftstofftank ansammelndes Wasser über den Ablasskanal 11 abzulassen, ohne gleichzeitig den Kraftstoff, der eine geringere Dichte als Wasser aufweist, ebenfalls abfließen zu lassen. Der Kraftstoff wird während des Betriebs dann über das Einlassrohr 9 abgeführt, das sich einlassseitig, also in den Behälter hinein, weiter erstreckt als die Gehäusewandung 4.

Zum kontrollierten Ablassen der Flüssigkeit aus dem Sammelraum 10 ist ein Ventilelement 12 vorgesehen, dass den Ablasskanal verschließt bzw. freigibt. Das Ventilelement 12, das bei dem dargestellten Ausführungsbeispiel als Schraube ausgebildet ist, ist dabei von der Ausgangsseite 8 frei zugänglich.

Das Einlassrohr 9 geht auf der Ausgangsseite 8 in ein Auslassrohr 13 über, das einstückig mit dem Einlassrohr 9 ausgebildet ist. Das Einlassrohr 9 und das Auslassrohr 13 sind dabei T-förmig angeordnet, so dass das Auslassrohr 13 zwei freie Enden 14, 15 aufweist.

Während über das Ende 15 Flüssigkeit, insbesondere Kraftstoff, abgeführt werden kann und zum Anschließen weiterführender Leitungen am Ende 15 eine Anschlussstutzengeometrie 16 angeformt ist, ist in das andere Ende 14 ein Verschlusselement 16 eingeführt. Das Verschlusselement ist axial zwischen einer Offenstellung, in der Flüssigkeit aus dem Einlassrohr 9 in das Auslassrohr 13 fließt, in eine Schließstellung bewegbar, in der ein Durchfluss verhindert ist.

Zwischen einer Auslassrohrwandung 17 und dem Verschlusselement 16 ist eine Kulissenführung 18 ausgebildet, so dass bei Einbringen einer Drehbewegung in das Verschlusselement 16 sich dieses auch axial gegenüber dem Auslassrohr 13 bewegt. Die Kulissenführung 18 wird bei dem dargestellten Ausführungsbeispiel durch einen Stift 19 des Verschlusselements 16 in Verbindung mit einer Nut 20, die in der Auslassrohrwandung 17 eingebracht ist, gebildet. An ihren Enden verläuft die Nut 20 dabei in einer Umfangsrichtung, so dass das Verschlusselement 16 in seinen jeweiligen Endstellungen, die der Offenstellung bzw. Schließstellung entsprechen, gesichert ist. Zusätzlich kann die Nut 20 dort mit einer Rastung beispielsweise in Form einer kurzen Verengung versehen werden.

Zum Einbringen einer Drehbewegung in das Verschlusselement 16 sind an einem Kopf 21 des Verschlusselements 16 Drehmomentangriffsflächen 22 angeformt, die beispielsweise mit einem Schraubenschlüssel betätigt werden kann. Der Kopf 21 befindet sich dabei sowohl in der in Fig. 3 dargestellten Schließstellung als auch in der in Fig. 1 dargestellten Offenstellung des Verschlusselements 16 außerhalb des Auslassrohrs 13.

Fig. 2 zeigt den Ablaufstutzen nach Fig. 1, wobei eine Kappe 24 vorgesehen ist, die die Kulissenführung 18 und damit einen Teil des Auslassrohrs 13 abdeckt. Die Kappe 24 ist zylindrisch ausgebildet und weist eine Öffnung in ihrem Boden auf, durch den sich der Kopf 21 des Verschlusselements 16 erstreckt. Am Kopf 21 ist die Kappe 24 rastend über radial nach innen ragende Rastarme 25, 25 gehalten, so dass sie bei Bewegung des Verschlusselements 16 mit diesem zumindest axial mit bewegt wird. Dabei weist die Kappe 24 eine axiale Erstreckung auf, die zumindest der Länge des Stellwegs des Verschlusselements entspricht, so dass sowohl in der Offenstellung als auch in der Schließstellung die Kulissenführung und der aus dem Auslassrohr 13 herausragende Teil des Verschlusselements 16 bis auf den Kopf 22 abgedeckt und damit vor Verschmutzung geschützt ist. Eine Betätigung des Verschlusselements 16 ist bei dieser Ausgestaltung der Kappe 24 auch ohne vorheriges Entfernen der Kappe 24 möglich.

Fig. 3 zeigt den Ablaufstutzen 1 nach Fig. 2 in geschnittener Darstellung, wobei sich das Verschlusselement 16 in Schließstellung befindet. Das Verschlusselement 16 weist dabei einen zwischen zwei radial nach außen ragenden, umlaufenden Kragen 27, 28 ausgebildeten Ringraum 29 auf, der axial durch Dichtelemente 30, 31, 32 abgedichtet ist, die in entsprechenden Ringnuten 33, 34, 35, die in den Kragen 27, 28 ausgebildet sind, abgedichtet ist. Der Ringraum 29 erstreckt sich dabei axial zumindest so weit, dass er das einmündende Einlassrohr 9 vollständig überdecken kann. Sobald das Verschlusselement 16 in der Schließstellung ist, wird also ein Abfließen von Flüssigkeit aus dem Auslassrohr 13 verhindert.

Da das Auslassrohr 13 in Richtung zum Auslassende 15 eine kleineren Innendurchmesser aufweist als in die ausgehend von der Mündung des Einlassrohrs 9 entgegengesetzte Richtung, weist der Kragen 27 und das Dichtelement 30 ebenfalls einen geringeren Durchmesser auf als der Kragen 28 bzw. die Dichtelemente 31, 32. Das Dichtelement verliert damit beim Verschieben des Verschlusselements 16 von der Schließstellung in die Offenstellung seinen Kontakt mit der Innenwandung des Auslassrohrs 13. Da bereits im Mündungsbereich der Durchmesser vergrößert wird, wird so verhindert, das sich die Dichtung beim Verschieben in das Einlassrohr 9 hinein ausbreitet, wodurch es stark belastet werden würde. Insgesamt wird so eine längere Lebensdauer des Dichtelements 30 erreicht.

Im Bereich des Endes 14, in dem auch die Kulissenführung ausgebildet ist, weist das Auslassrohr 13 einen vergrößerten Durchmesser auf. Das Verschlusselement 16 stützt sich in diesem Bereich über Führungsrippen 36 innenseitig im Auslassrohr 13 ab. Somit ergibt sich eine stabile Lagerung. Dabei ergibt sich die notwendige Durchmesseranpassung des Verschlusselements an das Auslassrohr durch diese Führungsrippen, während der eigentliche Korpus des Verschlusselements einen im Wesentlichen konstanten Durchmesser behält. Damit ergibt sich eine Material und somit Kosten- und Gewichtsersparnis.

Zur weiteren Gewichtsersparnis ist das Verschlusselement 16 mit zwei miteinander fluchtenden Sacklöchern 37, 38 versehen, die einmal vom Kopf 21 und einmal von der gegenüberliegenden Stirnseite ausgehen. Zwischen den Sacklöchern ist eine Wandung 39 belassen, die ein Herausströmen von Flüssigkeit verhindert.

Am Kopf 21 befindet sich eine umlaufende Anlagefläche 40, die einen größeren Durchmesser aufweist als der größte Innendurchmesser des Auslassrohrs 13. In der in Fig. 3 dargestellten Schließstellung liegt die Anlagefläche 40 stirnseitig am Auslassrohr 13 an und verhindert ein weiteres Eindrehen des Verschlusselements. Der Stift 19 der Kulissenführung 18 wird somit entlastet.

In Fig. 4 ist der Auslassstutzen 1 mit einer alternativen Ausgestaltung der Kappe 41 gezeigt. Im Unterschied zu der Kappe 24 in der oben beschriebenen Ausgestaltung muss bei dieser Ausgestaltung die Kappe 41 vor Betätigung des Verschlusselements entfernt werden. Dabei ist die Kappe 41 derartig über eine elastische Verliersicherung 42 am Auslassrohr 13 gehalten, dass sie auch nach dem Abnehmen nicht vollständig entfernt werden kann.

Die Kappe 41 weist dabei eine ausreichende Länge auf, um auch das in Offenstellung befindliche Verschlusselement 16, das sich dann in seiner maximal ausgefahrenen Stellung befindet, aufnehmen zu können. Dabei überdeckt die Kappe 41 zumindest den Bereich des Auslassrohrs 13, in dem die Kulissenführung angeordnet ist. Diese wird dementsprechend vor Verschmutzung geschützt. Gehalten wird die Kappe 41 am Auslassrohr 13 im einfachsten Fall mittels Presspassung, also über Reibschluss, und kann so im Bedarfsfall relativ einfach abgezogen werden.

Die Erfindung ist nicht auf eine der vorbeschriebenen Ausführungsformen beschränkt, sondern in vielfältiger Weise abwandelbar. So kann der Ringraum beispielsweise durch eine Einschnürung gebildet werden und das Verschlusselement im Übrigen einen konstanten Durchmesser aufweisen. Auch ist es denkbar, das Auslassrohr nicht senkrecht, sondern in einem anderen Winkel zum Einlassrohr anzuordnen. Gegebenenfalls kann das Auslassrohr auch mittels Kunststoffschweißen oder einem anderen Verfahren stoffschlüssig mit dem Einlassrohr verbunden werden, falls dies fertigungstechnisch Vorteile bringt.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Ablaufstutzen
- 2: Gehäuse
- 3: Gehäuseboden
- 4: Gehäusewandung
- 5: Anschlussgeometrie
- 6: Ringdichtung
- 7: Einlassseite
- 8: Auslassseite
- 9: Einlassrohr
- 10: Sammelraum
- 11: Ablasskanal
- 12: Ventilelement
- 13: Auslassrohr
- 14: Ende
- 15: Ende
- 16: Verschlusselement
- 17: Auslassrohrwandung
- 18: Kulissenführung
- 19: Stift
- 20: Nut
- 21: Kopf
- 22: Drehmomentangriffsfläche
- 23: Anschlag
- 24: Kappe
- 25: Rastarm
- 26: Rastarm
- 27: Kragen
- 28: Kragen
- 29: Ringraum
- 30: Dichtelement
- 31: Dichtelement
- 32: Dichtelement
- 33: Ringnut
- 34: Ringnut
- 35: Ringnut
- 36: Führungsrippen
- 37: Sackloch
- 38: Sackloch
- 39: Wandung
- 40: Anlagefläche
- 41: Kappe
- 42: Verliersicherung

## Patentansprüche

1. Ablaufstutzen (1) mit einem becherförmigen Gehäuse (2), das einen Gehäuseboden (3) und eine Gehäusewandung (4) umfasst, wobei außen an der Gehäusewandung (4) eine Anschlussgeometrie (5) zum Einsetzen in eine Behälteröffnung ausgebildet ist, wobei ein Einlassrohr (9) von einer Einlassseite (7) zu einer Auslassseite (8) durch den Gehäuseboden (3) geführt ist und ein Sammelraum (10) zwischen Einlassrohr (9) und Gehäusewandung (4) ausgebildet ist, wobei das Gehäuse (2) einen Ablasskanal (11) aufweist, der vom Sammelraum (10) zur Auslassseite (8) führt und von der Auslassseite (8) verschließbar ist, **dadurch gekennzeichnet, dass** das Einlassrohr (9) auf der Auslassseite (8) in ein Auslassrohr (13) übergeht, das ein Verschlusselement (16) aufweist, das zwischen einer Offenstellung und einer Schließstellung bewegbar ist, wobei das Gehäuse (2) mit der Anschlussgeometrie (5), dem Einlassrohr (9) und dem Auslassrohr (13) einstückig aus Kunststoff gebildet ist.

2. Ablaufstutzen nach Anspruch 1, **dadurch gekennzeichnet, dass** das Einlassrohr in eine Auslassrohrwandung (17) des Auslassrohrs (13) mündet, wobei das Auslassrohr (13) insbesondere im Wesentlichen senkrecht zum Einlassrohr (9) verläuft.

3. Ablaufstutzen nach Anspruch 1 oder 2, **dadurch gekennzeichnet, dass** der Ablasskanal (11) mit einem insbesondere senkrecht zum Ablasskanal (11) geführten Ventilelement (12) verschließbar ist, das gegebenenfalls als Schraube ausgebildet ist.

4. Ablaufstutzen nach einem der vorherigen Ansprüche, **dadurch gekennzeichnet, dass** das Verschlusselement (16) von einem Ende (14) in das Auslassrohr (13) eingeführt ist und axial verschiebbar im Auslassrohr (13) gelagert ist, wobei insbesondere zwischen einer Auslassrohrwandung (17) und dem Verschlusselement (16) eine Kulissenführung (18) ausgebildet ist.

5. Ablaufstutzen nach einem der vorherigen Ansprüche, **dadurch gekennzeichnet, dass** das Verschlusselement (16) einen Ringraum (29) aufweist, wobei der Ringraum (29) in der Öffnungsstellung im Bereich einer Mündung des Einlassrohrs (9) in das Auslassrohr (13) positioniert ist.

6. Ablaufstutzen nach einem der vorherigen Ansprüche, **dadurch gekennzeichnet, dass** das Verschlusselement (16) in der Schließstellung vollständig auf einer Seite der Mündung des Einlassrohrs (9) im Auslassrohr (13) positioniert ist.

7. Ablaufstutzen nach einem der vorherigen Ansprüche, **dadurch gekennzeichnet, dass** Dichtelemente (30, 31, 32) insbesondere auf beiden Seiten des Ringraums (29) zwischen dem Verschlusselement (16) und der Auslassrohrwandung (17) angeordnet sind, die insbesondere in Ringnuten (33, 34, 35) gehalten sind, die im Verschlusselement (16) oder der Auslassrohrwandung (17) ausgebildet sind.

8. Ablaufstutzen nach einem der vorherigen Ansprüche, **dadurch gekennzeichnet, dass** das Verschlusselement (16) radial nach außen ragenden Führungsrippen (36) aufweist, die insbesondere in einem Bereich des Auslassrohrs (13) mit Durchmesservergrößerung an einer Innenwandung des Auslassrohrs (13) anliegen.

9. Ablaufstutzen nach einem der vorherigen Ansprüche, **dadurch gekennzeichnet, dass** das Verschlusselement (16) zumindest ein Sackloch (37, 38) aufweist, das insbesondere offen zur von der Mündung des Einlassrohrs (9) abgewandten Seite ausgebildet ist

10. Ablaufstutzen nach einem der vorherigen Ansprüche, **dadurch gekennzeichnet, dass** eine Kappe (24) am Verschlusselement (16) angeordnet ist, die sich in Richtung Einlassrohr (9) erstreckt und das Auslassrohr (13) umgibt, wobei sie insbesondere mit dem Verschlusselement (16) verrastet ist, wobei gegebenenfalls ein Kopf (21) des Verschlusselements (16) durch die Kappe (24) hindurch ragt.

11. Ablaufstutzen nach einem der Ansprüche 1 bis 9, **dadurch gekennzeichnet, dass** eine Kappe (41) vorgesehen ist, die im montierten Zustand das aus dem Auslassrohr (13) herausragende Ende des Verschlusselements (16) sowie das Auslassrohr (13) zumindest über eine axiale Länge überdeckt, die einem Stellweg des Verschlusselements (16) von der Offenstellung in die Schließstellung entspricht, wobei die Kappe (41) insbesondere mit einer Verliersicherung (42) am Auslassrohr (13) gehalten ist.

12. Ablaufstutzen nach einem der vorherigen Ansprüche, **dadurch gekennzeichnet, dass** an der Gehäusewandung (4) außenseitig eine Ringdichtung (6) am bodenseitigen Ende der Anschlussgeometrie (5) angeordnet ist, wobei insbesondere ein radial nach außen ragender Anschlag (23) auf einer von der Anschlussgeometrie (5) abgewandten Seite der Ringdichtung (6) ausgebildet ist.

## Claims

1. Drainage connector (1) having a cup-shaped housing (2) which comprises a housing base (3) and a housing wall (4), wherein on the outside of the housing wall (4) is formed a connecting geometry (5) for setting into a container opening, wherein an inlet pipe (9) is guided from an inlet side (7) to an outlet side (8) through the housing base (3) and a collecting space (10) is formed between inlet pipe (9) and housing wall (4), wherein the housing (2) has a discharge channel (11) which leads from the collecting space (10) to the outlet side (8) and can be closed from the outlet side (8), **characterised in that** the inlet pipe (9) on the outlet side (8) transitions into an outlet pipe (13) which has a closing element (16) which is movable between an open position and a closed position, wherein the housing (2) is formed one piece from plastic with the connecting geometry (5), the inlet pipe (9) and the outlet pipe (13).

2. Drainage connector according to claim 1, **characterised in that** the inlet pipe opens into an outlet pipe wall (17) of the outlet pipe (13), wherein the outlet pipe (13) extends in particular substantially perpendicularly to the inlet pipe (9).

3. Drainage connector according to claim 1 or 2, **characterised in that** the discharge channel (11) is closable with a valve element (12) guided in particular perpendicularly to the discharge channel (11), which valve element is where appropriate in the form of the screw.

4. Drainage connector according to any of the preceding claims, **characterised in that** the closing element (16) is inserted from one end (14) into the outlet pipe (13) and is supported in an axially displaceable manner in the outlet pipe (13), wherein in particular a slide guide (18) is formed between an outlet pipe wall (17) and the closing element (16).

5. Drainage connector according to any of the preceding claims, **characterised in that** the closing element (16) has an annular space (29), wherein the annular space (29) in the open position is positioned in the region of a mouthing of the inlet pipe (9) into the outlet pipe (13).

6. Drainage connector according to any of the preceding claims, **characterised in that** the closing element (16) in the closed position is positioned entirely on one side of the mouth of the inlet pipe (9) in the outlet pipe (13).

7. Drainage connector according to any of the preceding claims, **characterised in that** sealing elements (30, 31, 32) are disposed in particular on both sides of the annular space (29) between the closing element (16) and the outlet pipe wall (17), which sealing elements are in particular held in annular grooves (33, 34, 35) which are formed in the closing element (16) or the outlet pipe wall (17).

8. Drainage connector according to any of the preceding claims, **characterised in that** the closing element (16) has guide ribs (36) protruding radially to the outside, which in particular in a region of the outlet pipe (13) abut with a diameter increase on an inner wall of the outlet pipe (13).

9. Drainage connector according to any of the preceding claims, **characterised in that** the closing element (16) has at least one blind hole (37, 38) which is formed in particular open to the side facing away from the mouth of the inlet pipe (9).

10. Drainage connector according to any of the preceding claims, **characterised in that** a cover (24) is disposed on the closing element (16) which extends in the direction inlet pipe (9) and surrounds the outlet pipe (13), wherein it is in particular latched with the closing element (16), wherein where appropriate a head (21) of the closing element (16) extends through the cover (24).

11. Drainage connector according to any of claims 1 to 9, **characterised in that** a cover (41) is provided which in the installed condition covers the end, protruding out of the outlet pipe (13), of the closing element (16) and the outlet pipe (13) at least across an axial length which is equal to an adjustment path of the closing element (16) from the open position into the closed position, wherein the cover (41) is held on the outlet pipe (13) in particular with a securing device (42).

12. Drainage connector according to any of the preceding claims, **characterised in that** on the housing wall (4) on the outer side is disposed an annular seal (6) on the base-side end of the connecting geometry (5), wherein in particular a stop (23) projecting radially outwards is formed on a side of the annular seal (6) facing away from the connecting geometry (5).

## Revendications

1. Ajutage d'évacuation (1) avec un boîtier (2) en forme de godet qui comporte un fond de boîtier (3) et une paroi de boîtier (4), dans lequel à l'extérieur sur la paroi de boîtier (4) une géométrie de raccordement (5) est réalisée pour l'insertion dans une ouverture de récipient, dans lequel un tube d'entrée (9) est guidé d'un côté d'entrée (7) à un côté de sortie (8) au travers du fond de boîtier (3) et un espace de collecte (10) est réalisé entre le tube d'entrée (9) et la paroi de boîtier (4), dans lequel le boîtier (2) présente un canal de décharge (11) qui mène de l'espace de collecte (10) au côté de sortie (8) et peut être refermé par le côté de sortie (8), **caractérisé en ce que** le tube d'entrée (9) passe sur le côté de sortie (8) en un tube de sortie (13) qui présente un élément de fermeture (16) qui est mobile entre une position ouverte et une position fermée, dans lequel le boîtier (2) est formé d'un seul tenant en matière plastique avec la géométrie de raccordement (5), le tube d'entrée (9) et le tube de sortie (13).

2. Ajutage d'évacuation selon la revendication 1, **caractérisé en ce que** le tube d'entrée débouche dans une paroi de tube de sortie (17) du tube de sortie (13), dans lequel le tube de sortie (13) s'étend en particulier sensiblement perpendiculairement au tube d'entrée (9).

3. Ajutage d'évacuation selon la revendication 1 ou 2, **caractérisé en ce que** le canal de décharge (11) peut être refermé avec un élément de soupape (12) guidé en particulier perpendiculairement au canal de décharge (11) qui est réalisé éventuellement en tant que vis.

4. Ajutage d'évacuation selon l'une quelconque des revendications précédentes, **caractérisé en ce que** l'élément de fermeture (16) est introduit d'une extrémité (14) dans le tube de sortie (13) et est logé de manière axialement mobile dans le tube de sortie (13), dans lequel un guidage de coulisse (18) est réalisé en particulier entre une paroi de tube de sortie (17) et l'élément de fermeture (16).

5. Ajutage d'évacuation selon l'une quelconque des revendications précédentes, **caractérisé en ce que** l'élément de fermeture (16) présente un espace annulaire (29), dans lequel l'espace annulaire (29) est positionné dans la position d'ouverture dans la zone d'une embouchure du tube d'entrée (9) dans le tube de sortie (13).

6. Ajutage d'évacuation selon l'une quelconque des revendications précédentes, **caractérisé en ce que** l'élément de fermeture (16) est positionné dans la position fermée complètement sur un côté de l'embouchure du tube d'entrée (9) dans le tube de sortie (13).

7. Ajutage d'évacuation selon l'une quelconque des revendications précédentes, **caractérisé en ce que** des éléments étanches (30, 31, 32) sont agencés en particulier sur les deux côtés de l'espace annulaire (29) entre l'élément de fermeture (16) et la paroi de tube de sortie (17) qui sont maintenus en particulier dans des rainures annulaires (33, 34, 35) qui sont réalisées dans l'élément de fermeture (16) ou la paroi de tube de sortie (17).

8. Ajutage d'évacuation selon l'une quelconque des revendications précédentes, **caractérisé en ce que** l'élément de fermeture (16) présente des nervures de guidage (36) dépassant radialement vers l'extérieur qui reposent en particulier dans une zone du tube de sortie (13) avec un agrandissement de diamètre contre une paroi intérieure du tube de sortie (13).

9. Ajutage d'évacuation selon l'une quelconque des revendications précédentes, **caractérisé en ce que** l'élément de fermeture (16) présente au moins un trou borgne (37, 38) qui est réalisé en particulier ouvert vers le côté éloigné de l'embouchure du tube d'entrée (9).

10. Ajutage d'évacuation selon l'une quelconque des revendications précédentes, **caractérisé en ce qu'**un couvercle (24) est agencé sur l'élément de fermeture (16) qui s'étend en direction du tube d'entrée (9) et entoure le tube de sortie (13), dans lequel il est encliqueté en particulier avec l'élément de fermeture (16), dans lequel éventuellement une tête (21) de l'élément de fermeture (16) dépasse au travers du couvercle (24).

11. Ajutage d'évacuation selon l'une quelconque des revendications 1 à 9, **caractérisé en ce qu'**un couvercle (41) est prévu, lequel recouvre dans l'état monté l'extrémité sortant du tube de sortie (13) de l'élément de fermeture (16) ainsi que le tube de sortie (13) au moins sur une longueur axiale qui correspond à une course de réglage de l'élément de fermeture (16) de la position ouverte à la position fermée, dans lequel le couvercle (41) est maintenu en particulier avec une sécurité contre la perte (42) sur le tube de sortie (13).

12. Ajutage d'évacuation selon l'une quelconque des revendications précédentes, **caractérisé en ce que** sur la paroi de boîtier (4) côté extérieur une garniture annulaire (6) est agencée sur l'extrémité côté fond de la géométrie de raccordement (5), dans lequel en particulier une butée (23) dépassant radialement vers l'extérieur est réalisée sur un côté éloigné de la géométrie de raccordement (5) de la garniture annulaire (6).
